# EUROPÄISCHE PATENTSCHRIFT

(11) **EP 3 336 573 B1**
(45) Veröffentlichungstag und Bekanntmachung des Hinweises auf die Patenterteilung: **12.07.2023**
(21) Anmeldenummer: 17200600.9
(22) Anmeldetag: 08.11.2017
(51) Int. Cl.: G01S 5/02, H04W 4/02, H04W 4/40

(54) **VERFAHREN ZUM PRÜFEN EINER RÄUMLICHEN NÄHE EINES ERSTEN OBJEKTS ZU EINEM ZWEITEN OBJEKT**
METHODS FOR TESTING A SPATIAL PROXIMITY OF A FIRST OBJECT TO A SECOND OBJECT
PROCÉDÉS DE VÉRIFICATION D'UNE PROXIMITÉ SPATIALE D'UN PREMIER OBJET PAR RAPPORT À UN SECOND OBJET

(30) Priorität: 16.12.2016 DE 102016124618
(43) Veröffentlichungstag der Anmeldung: 20.06.2018
(73) Patentinhaber: Bayerische Motoren Werke Aktiengesellschaft, 80809 München (DE); Deutsche Telekom AG, 53113 Bonn (DE)
(72) Erfinder: Gehrsitz, Thomas, 81377 München (DE); Zimmermann, Sebastian, 80331 München (DE); Schnieders, Dominik, 52078 Aachen (DE)
(74) Vertreter: 2SPL Patentanwälte PartG mbB

(56) Entgegenhaltungen:
- EP-A2- 2 293 016
- DE-A1- 10 039 384
- DE-A1-102013 223 104
- US-A1- 2016 292 885
- BARDYN JEAN-PAUL ET AL: "IoT: The era of LPWAN is starting now", ESSCIRC CONFERENCE 2016: 42ND EUROPEAN SOLID-STATE CIRCUITS CONFERENCE, IEEE, 12. September 2016 (2016-09-12), Seiten 25-30, XP032980801, DOI: 10.1109/ESSCIRC.2016.7598235 [gefunden am 2016-10-18]

## Beschreibung

### Technisches Gebiet

Ausführungsbeispiele befassen sich mit der Verfolgung von Objekten. Insbesondere befassen sich Ausführungsbeispiele mit einem Verfahren zum Prüfen einer räumlichen Nähe eines ersten Objekts zu einem zweiten Objekt.

### Hintergrund

Bei vielen Gelegenheiten ist es unerlässlich zu wissen, wo sich ein bestimmter Gegenstand befindet. Für einen Fahrer kann es z.B. oftmals umständlich sein, zu überprüfen, ob sich alle wichtigen bzw. benötigten Gegenstände im Fahrzeug befinden. Insbesondere in Situation, wie etwa der Fahrt in den Urlaub, bei der eine Vielzahl von Gegenständen im Fahrzeug mitgeführt wird, kann die Überprüfung zeitintensiv sein. Ebenso kann die Überprüfung, ob dienstliche Gegenstände, wie etwa ein Aktenkoffer, im Fahrzeug sind, umständlich sein. Auch kann die Überprüfung des Mitführens von Gegenständen, deren Mitführung im Fahrzeug gesetzlich vorgeschrieben ist (z.B. Verbandskasten, Warnweste), mit einigem Aufwand verbunden sein. Auch außerhalb des Fahrzeugs kann es von Interesse sein zu wissen, wo sich ein bestimmter Gegenstand befindet.

Druckschrift DE 100 39 384 A1 schlägt ein Verfahren und eine Vorrichtung zur Bestimmung von Positionsdaten von beweglichen Objekten vor.

In Druckschrift DE 10 2013 223 104 A1 wird ein Objektüberwachungssystem vorgeschlagen.

Druckschrift US 2016/0292885 A1 schlägt ein Verfahren zum Erkennen von Bewegungsdivergenz bzw. -konvergenz von miteinander in Verbindung stehenden Objekten vor.

In Jean-Paul Bardyn et al.: "IoT: The Era LPWAN is starting now", in European Solid-State Circuits Conference, ESSCIRC Conference 2016: 42nd IEEE, 2016, S. 25 bis 30 werden Niedrigenergieweitverkehrnetzwerke vorgeschlagen.

Druckschrift EP 2 293 016 A2 schlägt ferner eine Verfahren zur Bestimmung der momentanen Position eines mobilen Endgeräts vor, bei dem die Häufigkeit der Positionsbestimmung abhängig von einem Distanzschwellwert und einer Distanz zwischen einer momentanen Position und einer angenommenen zukünftigen Position des mobilen Endgeräts eingestellt wird.

Es besteht daher ein Bedürfnis, eine verbesserte Möglichkeit zur Verfolgung von Gegenständen bereitzustellen.

### Zusammenfassung

Ausführungsbeispiele von Verfahren zum Prüfen einer räumlichen Nähe eines ersten Objekts zu einem zweiten Objekt ermöglichen dies.

Ein Verfahren zum Prüfen einer räumlichen Nähe eines ersten Objekts zu einem zweiten Objekt gemäß einem ersten Ausführungsbeispiel umfasst ein netzwerkseitiges Bestimmen einer Position des ersten Objekts durch ein zellulares Netzwerk auf Basis eines über das zellulare Netzwerk ausgesendeten Signals des ersten Objekts. Ferner umfasst das Verfahren ein Vergleichen der Position des ersten Objekts mit einer Position des zweiten Objekts. Das Verfahren umfasst zudem ein Feststellen der räumlichen Nähe des ersten Objekts zu dem zweiten Objekt, wenn die Position des ersten Objekts einen Abstand zu der Position des zweiten Objekts aufweist, der kleiner als ein vorgegebener Abstand ist. Wenn festgestellt wird, dass keine räumliche Nähe des ersten Objekts zu dem zweiten Objekt vorliegt, umfasst das Verfahren ferner ein Orten des ersten Objekts über das zellulare Netzwerk zur netzwerkseitigen Verfolgung des ersten Objekts. Das Signal des ersten Objekts wird in Folge einer vorbestimmten Mindestbewegung des ersten Objekts innerhalb eines vorbestimmten Zeitraums ausgesendet.

Ein Verfahren zum Prüfen einer räumlichen Nähe eines ersten Objekts zu einem zweiten Objekt gemäß einem zweiten Ausführungsbeispiel umfasst ein Bestimmen einer ersten Bewegungstrajektorie des ersten Objekts auf Basis von durch ein zellulares Netzwerk anhand zumindest zweier über das zellulare Netzwerk ausgesendeter Signale des ersten Objekts netzwerkseitig ermittelter Positionen des ersten Objekts. Weiterhin umfasst das Verfahren ein Vergleichen der Bewegungstrajektorie des ersten Objekts mit einer zweiten Bewegungstrajektorie des zweiten Objekts. Wenn ein Verlauf der ersten Bewegungstrajektorie gemäß einem vorgegebenen Kriterium nicht einem Verlauf der zweiten Bewegungstrajektorie entspricht, umfasst das Verfahren ferner ein Feststellen, dass keine räumliche Nähe des ersten Objekts zu dem zweiten Objekt vorliegt. Ferner umfasst das Verfahren ein Orten des ersten Objekts über das zellulare Netzwerk zur netzwerkseitigen Verfolgung des ersten Objekts. Zumindest eines der zwei Signale des ersten Objekts wird in Folge einer vorbestimmten Mindestbewegung des ersten Objekts innerhalb eines vorbestimmten Zeitraums ausgesendet.

Weiterhin betreffen Ausführungsbeispiele ein Programm mit einem Programmcode zum Durchführen eines der obigen Verfahren, wenn der Programmcode auf einem Computer, einem Prozessor oder einer programmierbaren Hardwarekomponente ausgeführt wird.

### Figurenkurzbeschreibung

Ausführungsbeispiele werden nachfolgend bezugnehmend auf die beiliegenden Figuren näher erläutert. Es zeigen:
Fig. 1 zeigt ein Ablaufdiagramm eines ersten Ausführungsbeispiels eines Verfahrens zum Prüfen einer räumlichen Nähe eines ersten Objekts zu einem zweiten Objekt;
Fig. 2 zeigt ein Ablaufdiagramm eines zweiten Ausführungsbeispiels eines Verfahrens zum Prüfen einer räumlichen Nähe eines ersten Objekts zu einem zweiten Objekt;
Fig. 3 zeigt eine erste Datenverarbeitungsanlage; und
Fig. 4 zeigt eine zweite Datenverarbeitungsanlage.

### Beschreibung

Verschiedene Ausführungsbeispiele werden nun ausführlicher unter Bezugnahme auf die beiliegenden Zeichnungen beschrieben, in denen einige Ausführungsbeispiele dargestellt sind. In den Figuren können die Dickenabmessungen von Linien, Schichten und/oder Regionen um der Deutlichkeit Willen übertrieben dargestellt sein.

Bei der nachfolgenden Beschreibung der beigefügten Figuren, die lediglich einige exemplarische Ausführungsbeispiele zeigen, können gleiche Bezugszeichen gleiche oder vergleichbare Komponenten bezeichnen. Ferner können zusammenfassende Bezugszeichen für Komponenten und Objekte verwendet werden, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

Obwohl Ausführungsbeispiele auf verschiedene Weise modifiziert und abgeändert werden können, sind Ausführungsbeispiele in den Figuren als Beispiele dargestellt und werden hierin ausführlich beschrieben. Es sei jedoch klargestellt, dass nicht beabsichtigt ist, Ausführungsbeispiele auf die jeweils offenbarten Formen zu beschränken, sondern dass Ausführungsbeispiele vielmehr sämtliche funktionale und/oder strukturelle Modifikationen, Äquivalente und Alternativen, die im Bereich der Erfindung liegen, abdecken sollen. Gleiche Bezugszeichen bezeichnen in der gesamten Figurenbeschreibung gleiche oder ähnliche Elemente.

Man beachte, dass ein Element, das als mit einem anderen Element "verbunden" oder "verkoppelt" bezeichnet wird, mit dem anderen Element direkt verbunden oder verkoppelt sein kann oder dass dazwischenliegende Elemente vorhanden sein können.

Die Terminologie, die hierin verwendet wird, dient nur der Beschreibung bestimmter Ausführungsbeispiele und soll die Ausführungsbeispiele nicht beschränken. Wie hierin verwendet, sollen die Singularformen " einer", " eine", "eines" und "der, die, das" auch die Pluralformen beinhalten, solange der Kontext nicht eindeutig etwas anderes angibt. Ferner sei klargestellt, dass die Ausdrücke wie z.B. "beinhaltet", "beinhaltend", aufweist" und/oder "aufweisend", wie hierin verwendet, das Vorhandensein von genannten Merkmalen, ganzen Zahlen, Schritten, Arbeitsabläufen, Elementen und/oder Komponenten angeben, aber das Vorhandensein oder die Hinzufügung von einem bzw. einer oder mehreren Merkmalen, ganzen Zahlen, Schritten, Arbeitsabläufen, Elementen, Komponenten und/oder Gruppen davon nicht ausschließen.

Solange nichts anderes definiert ist, haben sämtliche hierin verwendeten Begriffe (einschließlich von technischen und wissenschaftlichen Begriffen) die gleiche Bedeutung, die ihnen ein Durchschnittsfachmann auf dem Gebiet, zu dem die Ausführungsbeispiele gehören, beimisst. Ferner sei klargestellt, dass Ausdrücke, z.B. diejenigen, die in allgemein verwendeten Wörterbüchern definiert sind, so zu interpretieren sind, als hätten sie die Bedeutung, die mit ihrer Bedeutung im Kontext der einschlägigen Technik konsistent ist, solange dies hierin nicht ausdrücklich anders definiert ist.

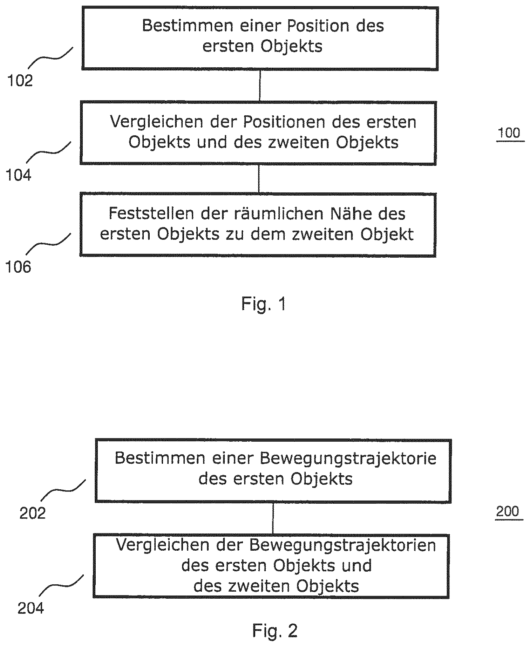

**Fig. 1** zeigt ein Verfahren 100 zum Prüfen einer räumlichen Nähe eines ersten Objekts zu einem zweiten Objekt. Das Verfahren 100 umfasst ein Bestimmen 102 einer Position des ersten Objekts auf Basis eines über ein zellulares Netzwerk ausgesendeten Signals des ersten Objekts. Ferner umfasst das Verfahren 100 ein Vergleichen 104 der Position des ersten Objekts mit einer Position des zweiten Objekts. Das Verfahren 100 umfasst zudem ein Feststellen 106 der räumlichen Nähe des ersten Objekts zu dem zweiten Objekt, wenn die Position des ersten Objekts einen Abstand zu der Position des zweiten Objekts aufweist, der kleiner als ein vorgegebener Abstand ist.

Durch das Vergleichen 104 der Position des ersten Objekts mit der Position zweiten Objekts kann bestimmt werden, wie weit die Objekte voneinander entfernt sind. Das Verfahren 100 kann es daher ermöglichen, festzustellen, ob sich das erste Objekt in der Nähe des zweiten Objekts befindet.

Bei dem ersten Objekt kann es sich um jegliche bewegliche, d.h. transportable (z.B. tragbare) Vorrichtung, handeln. Beispielsweise kann es sich bei dem ersten Objekt um einen Schlüssel, ein Kleidungsstück, einen Aktenkoffer, ein mobiles Endgerät (z.B. Smartphone oder Tablet-Computer), ein Gepäckstück oder einen Anhänger, der an einem anderen Gegenstand angebracht werden kann (z.B. mechanisch oder durch kleben), handeln.

Das erste Objekt kann beispielsweise eine Kommunikationsvorrichtung aufweisen, um über das zellulare Netzwerk Signale auszusenden. Bei dem zellularen Netzwerk kann es sich z.B. um ein Mobilfunksystem handeln, das von entsprechenden Standardisierungsgremien, wie z.B. dem 3rd Generation Partnership Project, 3GPP, standardisiert wurde. Beispielsweise umfasst dies das Global System for Mobile Communications (GSM), Enhanced Data Rates for GSM Evolution (EDGE), GSM EDGE Radio Access Network (GERAN), das Universal Terrestrial Radio Access Network (UTRAN) oder das Evolved UTRAN (E-UTRAN), wie z. B. das Universal Mobile Telecommunication System (UMTS), Long Term Evolution (LTE) oder LTE-Advanced (LTE-A), System der fünften Generation (5G) oder auch Mobilfunksysteme anderer Standards.

Das Bestimmen 102 der Position des ersten Objekts erfolgt auf Basis des über das zellulare Netzwerk ausgesendeten Signals, d.h. netzwerkseitig. Beispielhaft sei hier nur das Uplink-Time Difference of Arrival (U-TDoA) Verfahren genannt, bei dem von mehreren Zeitmesseinheiten (engl. Location Measurement Unit, LMU) die Zeit bestimmt wird, die ein Signal von einem Sender zu jeweiligen Empfängern der mehreren Zeitmesseinheiten braucht. Aus den bestimmten Zeiten wird anschließend die Position des Senders bestimmt. Das erste Objekt kann z.B. eine Nachricht an ein Back-End senden. Das Senden einer beliebigen Nachricht ermöglicht die Lokalisierung über das Netzwerk.

Die Position des zweiten Objekts kann z.B. unter Verwendung eines globalen Navigationssatellitensystems (engl. Global Navigation Satellite System, GNSS) erfolgen. So können z.B. das Global Positioning System, GPS; das GLObal Navigation Satellite System, GLONASS; Galileo oder Beidou verwendet werden. Falls das Objekt über eine eigene Anbindung an ein Mobilfunknetz besitzt, kann alternativ die Position des Objekts auch über das Mobilfunksystem (z.B. mittels U-TDoA; Observed Time Difference of Arrival, OT-DoA, oder enhanced Cell ID, eCID) oder eine Kombination beider Ansätze bestimmt werden.

Mittels der Lokalisierung des ersten Objekts über das Netzwerk sowie der bekannten Position des zweiten Objekts (z.B. GPS basiert, Zelle, etc.) kann durch das Verfahren 100 überprüft werden, ob sich das zweite Objekt in der Nähe des zweiten Objekts befindet. Bei dem vorgegebenen Abstand kann es sich beispielsweise um einen Abstand des ersten Objekts zu dem zweiten Objekt unter normalen (gewöhnlichen) Umständen handeln. Der vorgegebene Abstand kann z.B. 10 Zentimeter (cm), 50 cm, 1 m, 2 m, 5 m, 10 m oder mehr betragen.

Um eine möglichst flächendeckende Anwendbarkeit des Verfahrens 100 sicherzustellen (d.h. eine möglichst hohe Verfügbarkeit der Position des ersten Objekts zu ermöglichen), kann ein Signal mit niedriger Datenrate vorteilhaft sein. Daher kann das Signal des ersten Objekts beispielsweise eine Datenrate von weniger als 1,1 Mbit/s aufweisen.

Um einen Energiespeicher des ersten Objekts zu schonen, d.h. im Umkehrschluss eine Betriebsdauer des ersten Objekts zu verlängern, kann es vorteilhaft sein, das Signal des ersten Objekts möglichst energieeffizient über das zellulare Netzwerk auszusenden. Dazu kann das Signal des ersten Objekts über ein Niedrigenergieweitverkehrnetzwerk (engl. Low Power Wide Area Network, LPWAN bzw. LPN) übertragen werden. Beispielsweise kann das Signal des ersten Objekts dem NB-LTE-MTC Standard des 3GPP, dem NB-IoT Standard des 3GPP, dem LoRA Standard der LoRa Alliance oder dem SIGFOX Standard der Firma SIGFOX genügen. Dabei wird jeweils auf die zum Anmeldetag geltende Version des Standards Bezug genommen. Dies kann z.B. eine lange Verfügbarkeit einer Batterie des ersten Objekts ermöglichen. Im Umkehrschluss kann auch die Verwendung eines möglichst kleinen Batteriepackages in dem ersten Objekt ermöglicht werden.

Weiterhin kann es vorteilhaft sein, ein minimales Senden von Signalen über das zellulare Netzwerk bei einer gleichzeitig hohen Verfügbarkeit der Position des ersten Objekts zu ermöglichen. Dazu kann das Signal des ersten Objekts z.B. (nur) in Folge einer vorbestimmten Mindestbewegung des ersten Objekts innerhalb eines vorbestimmten Zeitraums ausgesendet werden. Die Mindestbewegung kann z.B. über einen oder mehrere Bewegungs-, Beschleunigungs- und/oder Lagesensoren des ersten Objekts bestimmt werden. Entscheidend für die Effizienz des Systems kann also die Logik für das Senden der Daten sein. Beispielsweise kann erst bei einer Mindestbewegung über einen Zeitraum ein Senden eingeleitet werden. So kann z.B. eine übermäßige Belastung der Batterie vermieden werden (z.B. IoT-Geräte sind in der Regel batteriebetrieben, so dass die Batterielaufzeit erfolgskritisch für das Verfahren 100 sein kann). Dies kann sowohl für eine initiale Bewegung als auch eine fortwährende Bewegung des ersten Objekts gelten.

Wenn festgestellt wird, dass keine räumliche Nähe des ersten Objekts zu dem zweiten Objekt vorliegt (z.B. weil die Position des ersten Objekts einen Abstand zu der Position des zweiten Objekts aufweist, der größer als der vorgegebene Abstand ist), kann das Verfahren 100 ferner ein Orten des ersten Objekts über das zellulare Netzwerk umfassen. Derart kann das erste Objekt netzwerkseitig verfolgt werden. Diese Informationen können z.B. bei einem Diebstahl des ersten Objekts verwendet werden, um das erste Objekt oder auch den Dieb aufzufinden.

Wenn festgestellt wird, dass keine räumliche Nähe des ersten Objekts zu dem zweiten Objekt vorliegt, kann das Verfahren 100 ferner ein Senden einer Nachricht an eine Kommunikationsvorrichtung eines Verantwortlichen für das erste Objekt (z.B. Eigentümer oder Besitzer des Objekts) umfassen. Derart kann der Verantwortliche umgehend über z.B. das Vergessen oder den Diebstahl des Objekts informiert werden, so dass der Verantwortliche umgehend darauf reagieren kann.

Das zweite Objekt kann beispielsweise ein Fahrzeug oder eine mobiles Endgerät (z.B. Mobiltelefon, Smartphone, Tablet-Computer, Laptop) sein. Ein Fahrzeug ist ein mobiles Verkehrsmittel für den Transport von Personen oder Gütern. Bei einem Fahrzeug kann es sich daher sowohl um ein Personen- als auch um ein Nutzfahrzeug handeln. Zum Beispiel kann ein Fahrzeug ein Personenkraftwagen, ein Lastkraftwagen, ein Motorrad oder ein Traktor sein. Allgemein kann ein Fahrzeug als eine Vorrichtung aufgefasst werden, die einen Motor, ein Antriebsstrangsystem sowie Räder umfasst. Derart kann mittels des Verfahrens 100 z.B. festgestellt werden, ob sich das erste Objekt innerhalb des Fahrzeugs befindet. Alternativ kann mittels des Verfahrens 100 z.B. festgestellt werden, ob sich das erste Objekt in der Nähe einer Person, welche das mobile Endgerät (z.B. in einer Jackentasche) mit sich führt, befindet.

Ausführungsbeispiele des Verfahrens 100 können ein Tracking der Position diverser Gegenstände ermöglichen. Ebenso kann eine Erinnerung (Meldung) erfolgen, falls Gegenstände fehlen, vergessen oder gestohlen wurden.

Das Verfahren 100 kann beispielsweise auf einer Datenverarbeitungsanlage (Back-End), wie einem Server, einem Rechenzentrum oder einer Computer-Cloud, ablaufen.

In **Fig. 2** ist ein weiteres Verfahren 200 zum Prüfen einer räumlichen Nähe eines ersten Objekts zu einem zweiten Objekt gezeigt. Das Verfahren 200 umfasst ein Bestimmen 202 einer ersten Bewegungstrajektorie des ersten Objekts auf Basis zumindest zweier über ein zellulares Netzwerk ausgesendeter Signale des ersten Objekts. Weiterhin umfasst das Verfahren 200 ein Vergleichen 204 der Bewegungstrajektorie des ersten Objekts mit einer zweiten Bewegungstrajektorie des zweiten Objekts.

Das Verfahren 200 kann es durch das Vergleichen 204 der Bewegungstrajektorien ermöglichen, festzustellen, ob sich das erste Objekt und das zweite Objekt ähnlich bewegen. Daraus kann auf eine räumliche Nähe des ersten Objekts zu dem zweiten Objekt geschlossen werden.

Die erste Bewegungstrajektorie als auch die zweite Bewegungstrajektorie sind jeweils Bahnkurven bzw. Pfade entlang derer sich das erste Objekt bzw. das zweite Objekt bewegen. Die erste Bewegungstrajektorie als auch die zweite Bewegungstrajektorie können z.B. in Form einer Mehrzahl (z.B. mehr als zwei) an Positions-Zeit-Tupel gegeben sein. Derart kann der zeitabhängige Verlauf der Positionen des ersten Objekts bzw. des zweiten Objekts angegeben werden.

Ferner kann das Verfahren 200 ein Feststellen der räumlichen Nähe des ersten Objekts zu dem zweiten Objekt umfassen, wenn ein Verlauf der ersten Bewegungstrajektorie gemäß einem vorgegebenen Kriterium einem Verlauf der zweiten Bewegungstrajektorie entspricht. Bei dem Kriterium kann es sich um jegliche Entscheidungsregel oder Mehrzahl an Entscheidungsregeln handeln, die geeignet sind, einen Aufenthalt des ersten Objekts in der Nähe des zweiten Objekts anzuzeigen. Beispielsweise kann eine im Wesentlichen gleiche Änderung oder ein im Wesentlichen gleicher Verlauf der ersten Bewegungstrajektorie und der zweiten Bewegungstrajektorie als Kriterium verwendet werden.

Die zumindest zwei Signale des ersten Objekts können dabei jeweils wiederum über ein LPWAN übertragen werden. Beispielsweise können die zumindest zwei Signale des ersten Objekts dem LTE-MTC Standard des 3GPP, dem NB-IoT Standard des 3GPP, dem LoRA Standard der LoRa Alliance oder dem SIGFOX Standard der Firma SIGFOX genügen. Dadurch kann ein energieeffizientes Aussenden der Signale ermöglicht werden. Eine Batterie des ersten Objekts kann dadurch geschont werden.

Auch kann das Bestimmen 202 der ersten Bewegungstrajektorie des ersten Objekts zudem auf zumindest einem von dem ersten Objekt empfangenen Sensormesswert basieren. Beispielsweise kann das erste Objekt einen oder mehrere Sensoren für die Erfassung einer Beschleunigung oder einer Drehung (z.B. über eine inertiale Messeinheit mit einem Akzelerometer und/oder einem Gyroskop) des ersten Objekts erfasst und übertragen werden. Die Sensormesswerte können z.B. höher auflösend sein als die netzwerkseitig ermittelte Position des ersten Objekts. Derart kann eine Genauigkeit der ersten Bewegungstrajektorie erhöht und somit auch das Vergleichen 204 mit der zweiten Bewegungstrajektorie verbessert sein.

Die zweite Bewegungstrajektorie kann beispielsweise auf zumindest zwei über das zellulare Netzwerk ausgesendeten Signalen des zweiten Objekts basieren. Die Position des zweiten Objekts kann somit ebenfalls netzwerkseitig bestimmt werden. Beispielhaft sei hier nur eine Positionsbestimmung mittel U-TDoA genannt. Das zweite Objekt kann z.B. eine Nachricht an ein Back-End senden. Das Senden einer beliebigen Nachricht kann die Lokalisierung über das Netzwerk ermöglichen.

Um eine möglichst hohe Verfügbarkeit der Position des zweiten Objekts zu ermöglichen, kann beispielsweise wiederum eine Datenrate der Signale des zweiten Objekts jeweils beschränkt sein (z.B. kleiner als 1,1 Mbit/s). Die zumindest zwei Signale des zweiten Objekts können dabei jeweils wiederum über ein LPWAN übertragen werden. Beispielsweise können die zumindest zwei Signale des zweiten Objekts dem LTE-MTC Standard des 3GPP, dem NB-IoT Standard des 3GPP, dem LoRA Standard der LoRa Alliance oder dem SIGFOX Standard der Firma SIGFOX genügen. Dadurch kann ein energieeffizientes Aussenden der Signale ermöglicht werden. Eine Batterie des zweiten Objekts kann dadurch geschont werden.

Zumindest eines der zwei Signale des ersten Objekts kann beispielsweise (nur) in Folge einer vorbestimmten Mindestbewegung des ersten Objekts innerhalb eines vorbestimmten Zeitraums ausgesendet werden. Derart kann ein minimales Senden von Signalen über das zellulare Netzwerk bei einer gleichzeitig hohen Verfügbarkeit der Position des ersten Objekts ermöglicht werden. Die Mindestbewegung kann z.B. über einen oder mehrere Bewegungs-, Beschleunigungs- und/oder Lagesensoren des ersten Objekts bestimmt werden.

Das Verfahren 200 kann ferner ein Feststellen, dass keine räumliche Nähe des ersten Objekts zu dem zweiten Objekt vorliegt, umfassen, wenn ein Verlauf der ersten Bewegungstrajektorie gemäß einem vorgegebenen Kriterium nicht einem Verlauf der zweiten Bewegungstrajektorie entspricht. Bei dem Kriterium kann es sich z.B. um eines der oben genannten Kriterien handeln. Das Verfahren 200 kann dann ferner ein Orten des ersten Objekts über das zellulare Netzwerk umfassen. Derart kann eine netzwerkseitige Verfolgung des ersten Objekts ermöglicht werden. Diese Informationen können z.B. bei einem Diebstahl des ersten Objekts verwendet werden, um das erste Objekt aufzufinden.

Das Verfahren 200 kann auch ein Empfangen von Information über das erste Objekt von dem ersten Objekt umfassen. Weiterhin kann das Verfahren 200 ein Senden der Information über das erste Objekt an eine Kommunikationseinrichtung (z.B. Mobiltelefon, Smartphone, Tablet-Computer) eines Verantwortlichen (z.B. Besitzer oder Eigentümer) für das erste Objekt. Handelt es sich bei dem ersten Objekt z.B. um einen Verbandskasten, kann dieser z.B. Informationen über ein bereits eingetretenes oder baldiges Überschreiten der zulässigen Verwendungsdauer aussenden, welche einem Besitzer z.B. eines Fahrzeugs (als Beispiel für das zweite Objekt), in dem sich der Verbandskasten befindet, mitgeteilt werden können. Derart können dem Verantwortlichen somit wichtige Informationen über z.B. den Zustand des ersten Objekts mitgeteilt werden.

Das zweite Objekt kann beispielsweise ein Fahrzeug oder eine mobiles Endgerät sein. Derart kann mittels des Verfahrens 200 z.B. festgestellt werden, ob sich das erste Objekt innerhalb des Fahrzeugs befindet. Alternativ kann mittels des Verfahrens 200 z.B. festgestellt werden, ob sich das erste Objekt in der Nähe einer Person, welche das mobile Endgerät (z.B. in einer Jackentasche) mit sich führt, befindet.

Das Verfahren 200 kann beispielsweise auf einer Datenverarbeitungsanlage (Back-End), wie einem Server, einem Rechenzentrum oder einer Computer-Cloud, ablaufen.

In einigen Ausführungsbeispielen können z.B. Gegenstände mit kleinen NB-IoT Sendern ausgestattet werden, um die Gegenstände über die Mobilfunkinfrastruktur zu verfolgen (engl. tracking). Zusätzlich kann das NB-IoT Gerät eine Kommunikation mit einem Back-End ermöglichen, um beispielweise das Ablaufdatum eines Verbandskastens zu kommunizieren. Setzt sich beispielsweise ein Fahrzeug in Bewegung, kann überprüft werden, ob sich alle wichtigen Gegenstände im Fahrzeug befinden (die Bewegungsmuster von Fahrzeug und Gegenständen sind in diesem Fall identisch).

Beispielsweise kann auch die Bewegung eines Smartphones über NB-IoT erkannt werden. Dadurch kann geprüft werden, ob sich beispielweise Dinge mit hohem Wert (z.B. der Aktenkoffer) in der Nähe des Eigentümers befinden bzw. ob das Bewegungsmuster mit dem Eigentümer übereinstimmt. Auf diese Weise kann z.B. auch erkannt werden, ob wertvolle oder wichtige Gegenstände im Fahrzeug vergessen wurden. Zusätzlich bietet das Tracking-System die Möglichkeit, den Diebstahl von Gegenständen beispielsweise aus dem Fahrzeug zu erkennen und den Gegenstand über das Mobilfunknetz zu orten.

Ausführungsbeispiele können z.B. einen Algorithmus zum Matchen (Abgleichen) von Bewegungsprofile logisch örtlich verbundener Objekt (z.B. Referenzobjekt Auto mit Aktenkoffer, Verbandskasten, etc.; oder Referenzobjekt Smartphone mit Hausschlüssel, Aktentasche, etc.). Auch kann das Abgleichen der Bewegungsprofile zwischen den logisch örtlich verbundenen Objekten selbst erfolgen (Verbandskasten, Warndreieck, etc.)

Aus Batterie/Kosten/Package-Effizienzgründen kann das Bewegungsprofil der NB-IoT Geräte über eine Lokalisierung mittels des Netzwerks erfasst werden. Vorteil einer netzseitigen Lokalisierung ist die Möglichkeit auch Indoor (z.B. im Auto) eine Ortung vornehmen zu können. Das NB-IoT Gerät kann z.B. eine beliebige kurze Nachricht senden, um eine netzseitige Ortung zu ermöglichen. Das Matching kann aus den Bewegungsprofilen des Referenzobjekts (z.B. Fahrzeug oder Smartphone) und der NB-IoT Geräte erfolgen. Dabei können z.B. Positionen, Beschleunigungen oder Geschwindigkeiten über die Zeit berücksichtigt werden.

Auch können von den NB-IoT Geräten noch zusätzliche Bewegungsprofile wie Beschleunigungen, Drehungen (über inertiale Messeinheiten mit Akzelerometer und/oder Gyroskop) erfasst und übertragen werden. Das Abgleichen der höher auflösenden Beschleunigungen und/oder Drehungen kann eine zusätzliche Konfidenz für die örtliche Verbindung zwischen Referenzobjekt und NB-IoT Geräten ermöglichen. Hierbei können auch Störungen durch die unterschiedliche Lagerung berücksichtigt werden.

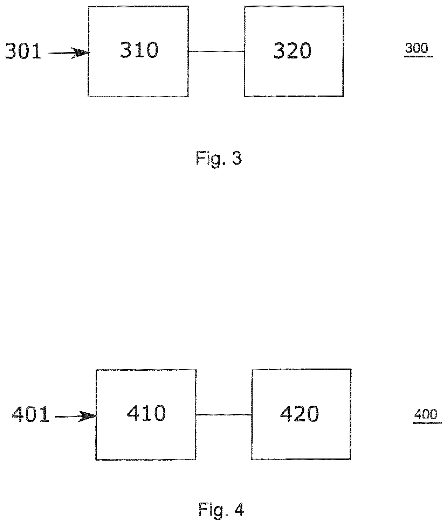

**Fig. 3** zeigt eine Datenverarbeitungsanlage 300 zum Prüfen einer räumlichen Nähe eines ersten Objekts zu einem zweiten Objekt. Die Datenverarbeitungsanlage 300 umfasst eine Empfangsschaltung 310, die eingerichtet ist, ein Positionssignal 301 zu empfangen. Das Positionssignal 301 zeigt eine Position des ersten Objekts an, welche auf Basis eines über ein zellulares Netzwerk ausgesendeten Signals des ersten Objekts bestimmt ist. Ferner umfasst die Datenverarbeitungsanlage 300 eine Auswerteschaltung 320, die eingerichtet ist, die Position des ersten Objekts mit einer Position des zweiten Objekts zu vergleichen. Die Auswerteschaltung 320 ist ferner eingerichtet, die räumliche Nähe des ersten Objekts zu dem zweiten Objekt festzustellen, wenn die Position des ersten Objekts einen Abstand zu der Position des zweiten Objekts aufweist, der kleiner als ein vorgegebener Abstand ist.

Durch das Vergleichen der Position des ersten Objekts mit der Position zweiten Objekts kann durch die Auswerteschaltung 320 bestimmt werden, wie weit die Objekte voneinander entfernt sind. Die Datenverarbeitungsanlage 300 kann es daher ermöglichen, festzustellen, ob sich das erste Objekt in der Nähe des zweiten Objekts befindet.

Bei der Empfangsschaltung 310 handelt es sich um eine Schaltung, die eingerichtet ist, drahtgebunden oder drahtlos das Positionssignal 301 zu empfangen. Beispielsweise kann das Positionssignal von dem zellularen Netzwerk empfangen werden.

Die Auswerteschaltung 320 kann z.B. einen oder mehrere Prozessoren bzw. einen oder mehrere Prozessorkerne, einen anwendungsspezifischen integrierten Schaltkreis (engl. ASIC = Application-Specific Integrated Circuit), einen integrierten Schaltkreis (engl. IC = Integrated Circuit), ein Ein-Chip-System (engl. SoC = System on a Chip), ein programmierbares Logikelement oder ein feldprogrammierbares Gatterarray mit einem Mikroprozessor (engl. FPGA = Field Programmable Gate Array) aufweisen, auf dem Software für den Vergleich der Positionen des ersten Objekts und des zweiten Objekts sowie für das Feststellen der räumlichen Nähe beider Objekte abläuft. Ferner kann die Auswerteschaltung 320 einen oder mehrere Speicher aufweisen, in denen z.B. die Software für den Vergleich der Positionen des ersten Objekts und des zweiten Objekts sowie für das Feststellen der räumlichen Nähe beider Objekte oder sonstige Daten gespeichert sein können.

Wie vorangehend ausgeführt, ist die Position des ersten Objekts auf Basis eines über das zellulare Netzwerk ausgesendeten Signals des ersten Objekts bestimmt. Das Signal des ersten Objekts kann dabei z.B. über ein LPWAN übertragen werden. Beispielsweise kann das Signal des ersten Objekts dem NB-LTE-MTC Standard des 3rd Generation Partnership Project, dem NB-IoT Standard des 3rd Generation Partnership Project, dem LoRA Standard der LoRa Alliance oder dem SIGFOX Standard der Firma SIGFOX genügen. Dadurch kann ein energieeffizientes Aussenden der Signale ermöglicht werden. Eine Batterie des ersten Objekts kann dadurch geschont werden.

In einigen Ausführungsbeispielen kann die Datenverarbeitungsanlage 300 zudem eine Sendeschaltung (nicht gezeigt) aufweisen für eine Kommunikation mit dem zellularen Netzwerk, dem ersten Objekt und/oder dem zweiten Netzwerk. Die Sendeschaltung kann dabei zur drahtgebundenen und/oder drahtlosen Kommunikation eingerichtet sein. Die Sendeschaltung kann z.B. einen Sender oder einen Sendeempfänger umfassen, um über das zellulare Netzwerk zu kommunizieren.

Die Datenverarbeitungsanlage 300 als auch ihre einzelnen Bestandteile (d.h. die Empfangsschaltung 310, die Auswerteschaltung 320 und optional die Sendeschaltung) können in einigen Ausführungsbeispielen ferner eingerichtet sein, einen oder mehrere Verfahrensschritte, die vorangehend in Zusammenhang mit Verfahren 100 beschrieben sind, auszuführen.

In **Fig. 4** ist noch eine weitere Datenverarbeitungsanlage 400 zum Prüfen einer räumlichen Nähe eines ersten Objekts zu einem zweiten Objekt. Die Datenverarbeitungsanlage 400 umfasst eine Empfangsschaltung 410, die eingerichtet ist, ein Bewegungssignal 401 zu empfangen. Das Bewegungssignal 401 zeigt eine erste Bewegungstrajektorie des ersten Objekts an, welche auf Basis zumindest zweier über ein zellulares Netzwerk ausgesendeter Signale des ersten Objekts bestimmt ist. Weiterhin umfasst die Datenverarbeitungsanlage 400 eine Auswerteschaltung 420, die eingerichtet ist, die Bewegungstrajektorie des ersten Objekts mit einer zweiten Bewegungstrajektorie des zweiten Objekts zu vergleichen.

Die Datenverarbeitungsanlage 400 kann es durch das Vergleichen der Bewegungstrajektorien ermöglichen, festzustellen, ob sich das erste Objekt und das zweite Objekt ähnlich bewegen. Daraus kann auf eine räumliche Nähe des ersten Objekts zu dem zweiten Objekt geschlossen werden.

Die Empfangsschaltung 410 ist eine Schaltung, die eingerichtet ist, drahtgebunden oder drahtlos das Bewegungssignal 401 zu empfangen. Beispielsweise kann das Bewegungssignal von dem zellularen Netzwerk empfangen werden.

Die Auswerteschaltung 420 kann z.B. einen oder mehrere Prozessoren bzw. einen oder mehrere Prozessorkerne, einen ASIC, einen IC, ein SoC, ein programmierbares Logikelement oder ein FPGA aufweisen, auf dem Software für den Vergleich der Bewegungstrajektorien des ersten Objekts und des zweiten Objekts abläuft. Ferner kann die Auswerteschaltung 420 einen oder mehrere Speicher aufweisen, in denen z.B. die Software für den Vergleich der Bewegungstrajektorien des ersten Objekts und des zweiten Objekts oder sonstige Daten gespeichert sein können.

Die Auswerteschaltung 420 kann beispielsweise eingerichtet sein, die räumliche Nähe des ersten Objekts zu dem zweiten Objekt festzustellen, wenn ein Verlauf der ersten Bewegungstrajektorie gemäß einem vorgegebenen Kriterium (z.B. eines des vorgenannten Kriterien) einem Verlauf der zweiten Bewegungstrajektorie entspricht.

Wie vorangehend ausgeführt, ist die Bewegungstrajektorie des ersten Objekts auf Basis zumindest zweier über das zellulare Netzwerk ausgesendeter Signale des ersten Objekts bestimmt. Die zumindest zwei Signale des ersten Objekts können jeweils über ein LPWAN übertragen werden. Beispielsweise können die zumindest zwei Signale des ersten Objekts dem LTE-MTC Standard des 3GPP, dem NB-IoT Standard des 3GPP, dem LoRA Standard der LoRa Alliance oder dem SIGFOX Standard der Firma SIGFOX genügen. Dadurch kann ein energieeffizientes Aussenden der Signale ermöglicht werden. Eine Batterie des ersten Objekts kann dadurch geschont werden.

Die erste Bewegungstrajektorie des ersten Objekts kann ferner auf Basis zumindest eines von dem ersten Objekt empfangenen Sensormesswerts bestimmt sein. Derart kann eine Genauigkeit der ersten Bewegungstrajektorie erhöht und somit auch das Vergleichen mit der zweiten Bewegungstrajektorie verbessert sein.

In einigen Ausführungsbeispielen kann die Empfangsschaltung 410 ferner eingerichtet sein, ein weiteres Bewegungssignal zu empfangen. Das weitere Bewegungssignal zeigt die zweite Bewegungstrajektorie des zweite Objekts an, welche auf Basis zumindest zweier über das zellulare Netzwerk ausgesendeter Signal des zweiten Objekts bestimmt ist. Beispielsweise kann das Bewegungssignal von dem zellularen Netzwerk empfangen werden.

Die zumindest zwei Signale des zweiten Objekts können jeweils über ein LPWAN übertragen werden. Beispielsweise können die zumindest zwei Signale des zweiten Objekts dem LTE-MTC Standard des 3GPP, dem NB-IoT Standard des 3GPP, dem LoRA Standard der LoRa Alliance oder dem SIGFOX Standard der Firma SIGFOX genügen. Dadurch kann ein energieeffizientes Aussenden der Signale ermöglicht werden. Eine Batterie des zweiten Objekts kann dadurch geschont werden.

In einigen Ausführungsbeispielen kann die Datenverarbeitungsanlage 400 zudem eine Sendeschaltung (nicht gezeigt) aufweisen für eine Kommunikation mit dem zellularen Netzwerk, dem ersten Objekt und/oder dem zweiten Netzwerk. Die Sendeschaltung kann dabei zur drahtgebundenen und/oder drahtlosen Kommunikation eingerichtet sein. Die Sendeschaltung kann z.B. einen Sender oder einen Sendeempfänger umfassen, um über das zellulare Netzwerk zu kommunizieren.

Die Datenverarbeitungsanlage 400 als auch ihre einzelnen Bestandteile (d.h. die Empfangsschaltung 410, die Auswerteschaltung 420 und optional die Sendeschaltung) können in einigen Ausführungsbeispielen ferner eingerichtet sein, einen oder mehrere Verfahrensschritte, die vorangehend in Zusammenhang mit Verfahren 200 beschrieben sind, auszuführen.

Die in der vorstehenden Beschreibung, den nachfolgenden Ansprüchen und den beigefügten Figuren offenbarten Merkmale können sowohl einzeln wie auch in beliebiger Kombination für die Verwirklichung eines Ausführungsbeispiels in ihren verschiedenen Ausgestaltungen von Bedeutung sein und implementiert werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-Ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einer programmierbaren Hardwarekomponente derart zusammenwirken können oder zusammenwirken, dass das jeweilige Verfahren durchgeführt wird.

Eine programmierbare Hardwarekomponente kann durch einen Prozessor, einen Computerprozessor (CPU = Central Processing Unit), einen Grafikprozessor (GPU = Graphics Processing Unit), einen Computer, ein Computersystem, einen ASIC, einen IC, ein SOC oder ein FPGA gebildet sein.

Das digitale Speichermedium kann daher maschinen- oder computerlesbar sein. Manche Ausführungsbeispiele umfassen also einen Datenträger, der elektronisch lesbare Steuersignale aufweist, die in der Lage sind, mit einem programmierbaren Computersystem oder einer programmierbare Hardwarekomponente derart zusammenzuwirken, dass eines der hierin beschriebenen Verfahren durchgeführt wird. Ein Ausführungsbeispiel ist somit ein Datenträger (oder ein digitales Speichermedium oder ein computerlesbares Medium), auf dem das Programm zum Durchführen eines der hierin beschriebenen Verfahren aufgezeichnet ist.

Allgemein können Ausführungsbeispiele der vorliegenden Erfindung als Programm, Firmware, Computerprogramm oder Computerprogrammprodukt mit einem Programmcode oder als Daten implementiert sein, wobei der Programmcode oder die Daten dahin gehend wirksam ist bzw. sind, eines der Verfahren durchzuführen, wenn das Programm auf einem Prozessor oder einer programmierbaren Hardwarekomponente abläuft. Der Programmcode oder die Daten kann bzw. können beispielsweise auch auf einem maschinenlesbaren Träger oder Datenträger gespeichert sein. Der Programmcode oder die Daten können unter anderem als Quellcode, Maschinencode oder Bytecode sowie als anderer Zwischencode vorliegen.

Ein weiteres Ausführungsbeispiel ist ferner ein Datenstrom, eine Signalfolge oder eine Sequenz von Signalen, der bzw. die das Programm zum Durchführen eines der hierin beschriebenen Verfahren darstellt bzw. darstellen. Der Datenstrom, die Signalfolge oder die Sequenz von Signalen kann bzw. können beispielsweise dahin gehend konfiguriert sein, um über eine Datenkommunikationsverbindung, beispielsweise über das Internet oder ein anderes Netzwerk, transferiert zu werden. Ausführungsbeispiele sind so auch Daten repräsentierende Signalfolgen, die für eine Übersendung über ein Netzwerk oder eine Datenkommunikationsverbindung geeignet sind, wobei die Daten das Programm darstellen.

Ein Programm gemäß einem Ausführungsbeispiel kann eines der Verfahren während seiner Durchführung beispielsweise dadurch umsetzen, dass dieses Speicherstellen ausliest oder in diese ein Datum oder mehrere Daten hinein schreibt, wodurch gegebenenfalls Schaltvorgänge oder andere Vorgänge in Transistorstrukturen, in Verstärkerstrukturen oder in anderen elektrischen, optischen, magnetischen oder nach einem anderen Funktionsprinzip arbeitenden Bauteile hervorgerufen werden. Entsprechend können durch ein Auslesen einer Speicherstelle Daten, Werte, Sensorwerte oder andere Informationen von einem Programm erfasst, bestimmt oder gemessen werden. Ein Programm kann daher durch ein Auslesen von einer oder mehreren Speicherstellen Größen, Werte, Messgrößen und andere Informationen erfassen, bestimmen oder messen, sowie durch ein Schreiben in eine oder mehrere Speicherstellen eine Aktion bewirken, veranlassen oder durchführen sowie andere Geräte, Maschinen und Komponenten ansteuern.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Verfahren (100) zum Prüfen einer räumlichen Nähe eines ersten Objekts zu einem zweiten Objekt, umfassend:
netzwerkseitiges Bestimmen (102) einer Position des ersten Objekts durch ein zellulares Netzwerk auf Basis eines über das zellulare Netzwerk ausgesendeten Signals des ersten Obj ekts;
Vergleichen (104) der Position des ersten Objekts mit einer Position des zweiten Objekts; und
Feststellen (106) der räumlichen Nähe des ersten Objekts zu dem zweiten Objekt, wenn die Position des ersten Objekts einen Abstand zu der Position des zweiten Objekts aufweist, der kleiner als ein vorgegebener Abstand ist,
wobei, wenn festgestellt wird, dass keine räumliche Nähe des ersten Objekts zu dem zweiten Objekt vorliegt, das Verfahren ferner Folgendes umfasst:
Orten des ersten Objekts über das zellulare Netzwerk zur netzwerkseitigen Verfolgung des ersten Objekts,
wobei das Signal des ersten Objekts in Folge einer vorbestimmten Mindestbewegung des ersten Objekts innerhalb eines vorbestimmten Zeitraums ausgesendet wird.

2. Verfahren nach Anspruch 1, wobei das Signal eine Datenrate von weniger als 1,1 Mbit/s aufweist.

3. Verfahren nach Anspruch 1 oder Anspruch 2, wobei das Signal dem NB-LTE-MTC Standard des 3rd Generation Partnership Project, dem NB-IoT Standard des 3rd Generation Partnership Project, dem LoRA Standard der LoRa Alliance oder dem SIGFOX Standard der Firma SIGFOX genügt.

4. Verfahren nach einem der vorhergehenden Ansprüche, wobei das zweite Objekt ein Fahrzeug oder ein mobiles Endgerät ist.

5. Verfahren (200) zum Prüfen einer räumlichen Nähe eines ersten Objekts zu einem zweiten Objekt, umfassend:
Bestimmen (202) einer ersten Bewegungstrajektorie des ersten Objekts auf Basis von durch ein zellulares Netzwerk anhand zumindest zweier über das zellulare Netzwerk ausgesendeter Signale des ersten Objekts netzwerkseitig ermittelter Positionen des ersten Objekts;
Vergleichen (204) der Bewegungstrajektorie des ersten Objekts mit einer zweiten Bewegungstrajektorie des zweiten Objekts;
Feststellen, dass keine räumliche Nähe des ersten Objekts zu dem zweiten Objekt vorliegt, wenn ein Verlauf der ersten Bewegungstrajektorie gemäß einem vorgegebenen Kriterium nicht einem Verlauf der zweiten Bewegungstrajektorie entspricht; und
Orten des ersten Objekts über das zellulare Netzwerk zur netzwerkseitigen Verfolgung des ersten Objekts,
wobei zumindest eines der zwei Signale des ersten Objekts in Folge einer vorbestimmten Mindestbewegung des ersten Objekts innerhalb eines vorbestimmten Zeitraums ausgesendet wird.

6. Verfahren nach Anspruch 5, ferner umfassend:
Feststellen der räumlichen Nähe des ersten Objekts zu dem zweiten Objekt, wenn ein Verlauf der ersten Bewegungstrajektorie gemäß einem vorgegebenen Kriterium einem Verlauf der zweiten Bewegungstrajektorie entspricht.

7. Verfahren nach Anspruch 5 oder Anspruch 6, wobei das Bestimmen (202) der ersten Bewegungstrajektorie des ersten Objekts ferner auf zumindest einem von dem ersten Objekt empfangenen Sensormesswert basiert.

8. Verfahren nach einem der Ansprüche 5 bis 7, wobei die zweite Bewegungstrajektorie auf zumindest zwei über das zellulare Netzwerk ausgesendeten Signalen des zweiten Objekts basiert.

9. Verfahren nach einem der Ansprüche 5 bis 8, ferner umfassend:
Empfangen von Information über das erste Objekt von dem ersten Objekt; und
Senden der Information über das erste Objekt an eine Kommunikationseinrichtung eines Verantwortlichen für das erste Objekt.

10. Programm mit einem Programmcode zum Durchführen eines der Verfahren gemäß einem der Ansprüche 1 bis 4 oder eines der Verfahren gemäß einem der Ansprüche 5 bis 9, wenn der Programmcode auf einem Computer, einem Prozessor oder einer programmierbaren Hardwarekomponente ausgeführt wird.

## Claims

1. A method (100) for testing a spatial proximity of a first object to a second object, comprising:
network-side determining (102) a position of the first object by a cellular network based on a signal of the first object emitted over the cellular network;
comparing (104) the position of the first object with a position of the second object; and
identifying (106) the spatial proximity of the first object to the second object when the position of the first object is a distance from the position of the second object that is less than a given distance,
wherein, if it is identified that there is no spatial proximity of the first object to the second object, the method further comprises:
locating the first object over the cellular network for network-side tracking of the first object,
wherein the signal of the first object is emitted as a result of a predetermined minimum movement of the first object within a predetermined time period.

2. The method of claim 1, wherein the signal has a data rate of less than 1.1 Mbit/s.

3. The method of claim 1 or claim 2, wherein the signal complies with the NB-LTE-MTC standard of the 3rd Generation Partnership Project, the NB-IoT standard of the 3rd Generation Partnership Project, the LoRA standard of the LoRa Alliance, or the SIGFOX standard of SIGFOX.

4. The method of any one of the preceding claims, wherein the second object is a vehicle or a mobile terminal.

5. A method (200) for testing a spatial proximity of a first object to a second object, comprising:
determining (202) a first trajectory of movement of the first object based on positions of the first object established by a cellular network on the network side using at least two signals of the first object emitted via the cellular network;
comparing (204) the trajectory of movement of the first object with a second trajectory of movement of the second object;
identifying that there is no spatial proximity of the first object to the second object when a course of the first trajectory of movement does not correspond to a course of the second trajectory of movement according to a given criterion; and
locating the first object over the cellular network for network-side tracking of the first object,
wherein at least one of the two signals of the first object is emitted as a result of a predetermined minimum movement of the first object within a predetermined time period.

6. The method of claim 5, further comprising:
identifying the spatial proximity of the first object to the second object when a course of the first trajectory of movement corresponds to a course of the second trajectory of movement according to a given criterion.

7. The method of claim 5 or claim 6, wherein determining (202) the first trajectory of movement of the first object is further based on at least one sensor reading received from the first object.

8. The method of any one of claims 5 to 7, wherein the second trajectory of movement is based on at least two signals of the second object emitted via the cellular network.

9. The method of any one of claims 5 to 8, further comprising:
receiving information about the first object from the first object; and
sending the information about the first object to a communication device of a person responsible for the first object.

10. A program having a program code for performing one of the methods of any of claims 1 to 4 or of one of the methods of any of claims 5 to 9, when the program code is executed on a computer, a processor, or a programmable hardware component.

## Revendications

1. Procédé (100) pour vérifier une proximité spatiale d'un premier objet par rapport à un deuxième objet, comprenant le fait de :
déterminer (102), côté réseau, une position du premier objet par un réseau cellulaire sur la base d'un signal du premier objet émis par l'intermédiaire du réseau cellulaire ;
comparer (104) la position du premier objet à une position du deuxième objet ; et
constater (106) la proximité spatiale du premier objet par rapport au deuxième objet lorsque la position du premier objet est à une distance de la position du deuxième objet qui est inférieure à une distance prédéfinie,
dans lequel, lorsqu'il est constaté qu'il n'y a pas de proximité spatiale entre le premier objet et le deuxième objet, le procédé comprend en outre le fait de :
localiser le premier objet par l'intermédiaire du réseau cellulaire pour le suivi côté réseau du premier objet,
dans lequel le signal du premier objet est émis à la suite d'un mouvement minimum prédéterminé du premier objet dans une période prédéterminée.

2. Procédé selon la revendication 1, dans lequel le signal présente un débit de données inférieur à 1,1 Mbit/s.

3. Procédé selon la revendication 1 ou la revendication 2, le signal étant conforme à la norme NB-LTE-MTC du 3rd Generation Partnership Project, la norme NB-IoT du 3rd Generation Partnership Project, la norme LoRA de la LoRa Alliance ou la norme SIGFOX de la société SIGFOX.

4. Procédé selon l'une des revendications précédentes, dans lequel le deuxième objet est un véhicule ou un terminal mobile.

5. Procédé (200) pour vérifier une proximité spatiale d'un premier objet par rapport à un deuxième objet, comprenant le fait de :
déterminer (202) une première trajectoire de mouvement du premier objet sur la base de positions du premier objet établies côté réseau par un réseau cellulaire en utilisant au moins deux signaux du premier objet émis par l'intermédiaire du réseau cellulaire ;
comparer (204) la trajectoire de mouvement du premier objet à une deuxième trajectoire de mouvement du deuxième objet ;
constater qu'il n'y a pas de proximité spatiale entre le premier objet et le deuxième objet lorsqu'une course de la première trajectoire de mouvement selon un critère prédéfini ne correspond pas à une course de la deuxième trajectoire de mouvement ; et
localiser le premier objet par l'intermédiaire du réseau cellulaire pour le suivi côté réseau du premier objet,
dans lequel au moins un des deux signaux du premier objet est émis à la suite d'un mouvement minimum prédéterminé du premier objet dans une période prédéterminée.

6. Procédé selon la revendication 5, comprenant en outre le fait de :
constater la proximité spatiale entre le premier objet et le deuxième objet lorsqu'une course de la première trajectoire de mouvement selon un critère prédéfini correspond à une course de la deuxième trajectoire de mouvement.

7. Procédé selon la revendication 5 ou la revendication 6, dans lequel le fait de déterminer (202) la première trajectoire de mouvement du premier objet est en outre basé sur au moins une valeur de mesure de capteur reçue du premier objet.

8. Procédé selon l'une des revendications 5 à 7, dans lequel la deuxième trajectoire de mouvement est basée sur au moins deux signaux du deuxième objet émis par l'intermédiaire du réseau cellulaire.

9. Procédé selon l'une des revendications 5 à 8, comprenant en outre le fait de :
recevoir une information concernant le premier objet de la part du premier objet ; et
envoyer l'informations concernant le premier objet à un dispositif de communication d'un responsable du premier objet.

10. Programme présentant un code de programme pour réaliser l'un des procédés selon l'une des revendications 1 à 4 ou l'un des procédés selon l'une des revendications 5 à 9, lorsque le code de programme est exécuté sur un ordinateur, un processeur ou un composant matériel programmable.
